# FASCICULE DE BREVET EUROPEEN

(11) **EP 4 598 811 B1**
(45) Date de publication et mention de la délivrance du brevet: **02.12.2026**
(21) Numéro de dépôt: 23786014.3
(22) Date de dépôt: 04.10.2023
(51) Int. Cl.: B64C 29/00, B64C 3/38, B64U 10/20, B64U 10/25

(54) **AÉRONEF À DÉCOLLAGE ET ATTERRISSAGE VERTICAL**
SENKRECHTSTARTER
VERTICAL TAKE OFF AND LANDING AIRCRAFT

(30) Priorité: 06.10.2022 FR 2210254
(43) Date de publication de la demande: 13.08.2025
(73) Titulaire: Office National d'Etudes et de Recherches Aérospatiales, 91120 Palaiseau (FR)
(72) Inventeur: TAGHIZAD, Armin, 91120 PALAISEAU (FR)
(74) Mandataire: Hautier IP
(86) Numéro de dépôt international: PCT/EP2023/077418
(87) Numéro de publication internationale: WO 2024/074543

(56) Documents cités:
- EP-A1- 3 736 213
- US-A1- 2020 333 779
- US-A1- 2021 129 985
- US-A1- 2021 362 849

## Description

### Domaine technique

L'invention concerne un aéronef à décollage et atterrissage vertical ou aéronef "VTOL" (acronyme anglais de "Vertical Take-off and Landing"). Plus particulièrement, l'invention concerne un aéronef VTOL à envergure variable.

### Arrière-plan

De nombreuses configurations d'aéronef VTOL ont été étudiées par le passé avec souvent le souci d'éviter une dégradation de l'aérodynamisme intrinsèque de l'aéronef. En effet, ce genre d'appareil présente souvent la particularité de disposer, outre les plans de voilure fixe pour la sustentation en vol d'avancement, d'un certain nombre d'hélices qui assurent la sustentation de l'appareil au décollage et à l'atterrissage vertical. La fonction de propulsion, quant à elle, peut être assurée par ces mêmes hélices si elles ont été conçues pivotables, ou par d'autres dispositifs tels que des soufflantes, des turboréacteurs ou tout autre dispositif capable de produire de la poussée.

L'utilisation simultanée de plans de voilure fixe et d'hélices sur un même aéronef VTOL, conduit nécessairement à l'apparition de phénomènes d'interactions aérodynamiques entre les sillages de ces organes (sillages hélices/plans de voilure fixe, sillages hélices/hélices, sillages plans de voilure fixe/plans de voilure fixe). Ces interactions impactent souvent les performances aérodynamiques de l'aéronef et, en conséquence, ses qualités de vol et ses performances en mission.

Ce phénomène s'amplifie lorsque l'aéronef est doté d'hélices à moteur électrique. En effet, en comparaison avec d'autres types de moteurs, pour une même puissance au décollage recherchée, il est nécessaire de multiplier le nombre de moteurs électriques, donc d'hélices, pour la sustentation. De plus, les exigences de sécurité des vols conduisent en général à augmenter le nombre d'hélices afin de pallier les cas de panne des moteurs électriques. Cette multiplication d'hélices accentue les phénomènes d'interaction et leurs conséquences sur les performances de l'aéronef. De surcroit, ce nombre élevé d'hélices nécessite des plans de voilure fixe de décollage et d'atterrissage adaptés et, au final, conduit à des dimensions d'aéronef relativement élevées, en longueur et en largeur. Ce manque de compacité condamne l'aéronef à ne pas pouvoir décoller ou se poser dans des zones confinées, telles que des forêts (clairières, zones arborées) ou des zones urbaines.
Enfin, limiter le poids des aéronef VTOL est une préoccupation constante.
Le document EP3736213A1 par exemple décrit un aéronef présentant des ailes pliables vers le bas, dont les extrémités sont conçues pour former des pieds sur lesquels se repose l'aéronef lors de son décollage ou son atterrissage. L'aéronef de D1 présente par ailleurs des hélices articulées pour pouvoir être rentrées à l'intérieur du fuselage pour minimiser la trainée de l'aéronef. La conception particulière de ces ailes et hélices induit un encombrement et un poids importants de l'aéronef.
Les documents US2021/129985A1, US2020/33779A1 et US2021/362849A1 divulguent également des aéronefs manquant de compacité et dont le poids est important, ce qui réduit la variété des zones où ces aéronefs peuvent se poser ou décoller.
Il existe donc un besoin pour un nouveau type d'aéronef VTOL plus compact, relativement léger et dans lequel les interactions aérodynamiques seraient diminuées.

### Présentation générale

Un aéronef à décollage et atterrissage vertical selon l'invention comprend un fuselage, au moins un système de propulsion, quatre hélices de sustentation et au moins deux plans de voilure fixe dont un plan de voilure principal et un plan de voilure arrière situé à l'arrière de l'aéronef. Le plan de voilure principal et le plan de voilure arrière sont tous les deux situés en arrière des hélices de sustentation les plus en avant, et tous les deux sont situés au-dessus des hélices de sustentation. Le plan de voilure principal a une envergure variable et comprend une paire d'ailes, chaque aile étant pliable suivant l'axe latéral de l'aéronef, de telle sorte qu'une partie d'extrémité mobile de l'aile vient se positionner le long et au-dessus d'une partie fixe de l'aile lors du pliage. L'aéronef comprend un système de commande permettant de faire varier l'envergure du plan de voilure principal en vol en dépliant chaque aile latéralement. Les quatre hélices de sustentation sont réparties de part et d'autre du plan de voilure principal et de part et d'autre du fuselage de sorte que:
les deux hélices de sustentation situées d'un même côté du fuselage sont reliées à la partie fixe de l'aile située du même côté du fuselage et sont séparées longitudinalement par au moins la grandeur de la corde du plan de voilure fixe située entre elles, et
les deux hélices de sustentation situées d'un même côté du plan de voilure principal sont séparées latéralement par au moins la largeur du fuselage située entre elles.
Un tel aéronef présente une architecture permettant de réduire les effets d'interaction aérodynamique entre les hélices de sustentation et les plans de voilure fixe. En effet, la position relative des plans de voilure fixe et des hélices de sustentation est définie de sorte que le sillage de l'ensemble des hélices a un impact négligeable sur l'aérodynamique des plans de voilure fixe situés en aval de ces hélices. De même, le pliage de la partie d'extrémité mobile de chaque aile au-dessus de la partie fixe de l'aile réduit les effets d'interaction aérodynamique avec les hélices lors du pliage.
En outre, l'envergure variable du plan de voilure principal permet de réduire l'encombrement latéral de ce plan de voilure, et donc de rendre l'aéronef plus compact en phase de décollage et d'atterrissage vertical.

Enfin, la partie fixe de chaque aile a pour fonction de supporter les contraintes mécaniques associées au pliage de l'aile, mais également de supporter les contraintes mécaniques associées aux deux hélices de sustentation qui lui sont reliées. La partie fixe peut donc être conçue pour présenter la résistance mécanique nécessaire à cette double fonction. Inversement, les autres parties de l'aéronef, déchargées de ces contraintes mécaniques, peuvent être conçues plus librement. En particulier, il est possible de limiter l'encombrement et la masse du fuselage, tout en conservant un espace accessible à l'intérieur de celui-ci. Au final, la concentration des contraintes mécaniques au niveau des parties fixes des ailes permet d'obtenir une structure plus compacte et plus optimisée en masse que si ces contraintes étaient réparties entre différentes parties de l'aéronef.

Par ailleurs, le positionnement des hélices de sustentation par rapport aux plans de voilure fixes permet de réduire l'impact, en termes de charges aérodynamiques, du sillage des hélices sur les plans de voilure fixes et, en particulier, sur les ailes du plan de voilure principal. Ainsi, les hélices n'ajoutent pas de contraintes mécaniques supplémentaires sur les parties fixes des ailes du plan de voilure principal.

Dans certains modes de réalisation, le système de commande est configuré pour augmenter l'envergure lors du passage du vol basse vitesse au vol de croisière, et pour diminuer l'envergure lors du passage du vol de croisière au vol basse vitesse. Ainsi, l'envergure est plus élevée en vol de croisière qu'en vol basse vitesse. En particulier, l'envergure est maximum en vol de croisière et minimum en vol basse vitesse.

Par voilure fixe, on entend désigner l'ensemble des surfaces portantes de 1 'aéronef qui ne tournent pas. La voilure est dite "fixe" par opposition aux voilures dites "tournantes". Certaines parties de la voilure fixe peuvent néanmoins être mobiles de manière à faire varier l'envergure de la voilure fixe. Un plan de voilure fixe peut être une surface portante de type paire d'ailes (qui peuvent être jointes au-dessus ou en dessous du fuselage, ou s'étendre de part et d'autre du fuselage), de type empennage ou de type canard.

Dans le présent exposé, les directions longitudinale et latérale sont parallèles, respectivement, à l'axe longitudinal et à l'axe latéral de l'aéronef. Les axes de l'aéronef sont des lignes imaginaires qui traversent l'aéronef comme suit :
- l'axe longitudinal, ou axe de roulis, s'étend du nez (extrémité avant) à la queue (extrémité arrière) de l'aéronef, à travers le fuselage et passe par le centre de masse de l'appareil;
- l'axe latéral, ou axe de tangage, s'étend d'une extrémité du plan de voilure fixe principal à l'autre extrémité de ce plan en passant par le centre de masse de l'appareil ;
- l'axe vertical, ou axe de lacet, passe par le centre de masse de l'appareil, du haut vers le bas, et est perpendiculaire aux deux autres axes.

L'avant et l'arrière, comme l'amont ou l'aval, sont définis par rapport au sens d'avancement de l'aéronef.

Comme indiqué précédemment, les hélices de sustentation sont séparées longitudinalement par au moins la grandeur de la corde du plan de voilure fixe située entre elles et latéralement par au moins la largeur du fuselage située entre elles. La corde est la ligne imaginaire entre le bord d'attaque et le bord de fuite du plan de voilure. La corde du plan de voilure fixe située entre les hélices est la corde située dans le plan vertical contenant les axes de rotation des hélices entourant le plan de voilure. La largeur du fuselage située entre les hélices est la plus grande dimension latérale du fuselage mesurée dans le plan vertical contenant les axes de rotation des hélices entourant le fuselage. Dans certains modes de réalisation, les hélices de sustentation sont séparées longitudinalement d'une distance comprise entre 1,3 et 3 fois ladite grandeur de la corde et/ou latéralement d'une distance comprise entre 1,3 et 3 fois ladite largeur du fuselage. La distance de séparation entre deux hélices est la distance séparant les extrémités les plus proches des pales des hélices.

Une telle séparation entre les hélices de sustentation permet, entre autres, de réduire considérablement le mélange des sillages des hélices sous l'aéronef, notamment en vol basse vitesse. En vol de transition (passage du vol basse vitesse vers le vol de croisière) l'interaction des sillages hélices/hélices est fortement réduite du fait de la réduction de la charge aérodynamique des hélices de sustentation obtenue grâce à la contribution croissante des plans de voilure fixe à la sustentation. En vol de croisière, cette interaction peut être supprimée car les hélices de sustentation peuvent être arrêtées. En particulier, dans certains modes de réalisation, le système de commande de l'aéronef est configuré pour faire tourner les hélices de sustentation en vol basse vitesse et les arrêter en vol de croisière.

En ce qui concerne l'impact du sillage des plans de voilure fixe sur les hélices de sustentation, il est quasi inexistant en vol basse vitesse, les plans de voilure fixe n'ayant pas ou peu de sillage. Les premiers effets se font sentir au fur et à mesure que l'aéronef prend de la vitesse, c'est-à-dire au début de la phase de transition, au passage du vol basse vitesse au vol de croisière. Lors de cette phase de transition, l'interaction des sillages plans de voilure fixe / hélices est relativement faible du fait de la faible portance des plans de voilure fixe. Enfin, en vol de croisière, cette interaction est inexistante car les hélices sont arrêtées et seuls les plans de voilure fixe portent le poids de l'aéronef.

Par vol basse vitesse, on entend désigner un vol stationnaire (sur place, à vitesse nulle ou quasi nulle) ou à basse vitesse, c'est-à-dire à des vitesses de vol inférieures à 56 km/h (30 nœuds). Par vol de croisière, on entend désigner un vol à des vitesses supérieures à la vitesse (dite vitesse de croisière minimum et notée Vc min) à partir de laquelle la portance créée par la voilure fixe compense entièrement le poids de l'aéronef.

La phase de transition correspond au passage du vol basse vitesse au vol de croisière, et inversement.

Dans certains modes de réalisation, l'envergure d'au moins un des plans de voilure fixe peut varier entre une envergure maximum et une envergure minimum, l'envergure minimum étant inférieure ou égale à 50 % et, plus particulièrement, à 40% de l'envergure maximum. Une envergure minimum égale à 50 % de l'envergure maximum correspond à une envergure minimum deux fois plus petite que l'envergure maximum.

L'envergure peut être réduite à son minimum en vol basse vitesse. L'aéronef gagne alors en compacité et possède une meilleure tenue aux vents.

Le plan de voilure principal comprend une paire d'ailes et a une envergure variable.
Chaque aile est pliable et le système de commande est configuré pour déplier chaque aile latéralement suivant la direction latérale. La variation d'envergure est ainsi faite latéralement, i.e. suivant l'axe latéral de l'aéronef. Cela évite, en particulier, de faire pivoter l'aile dans le plan horizontal et de la faire passer au-dessus des hélices de sustentation, ce qui créerait des interactions aérodynamiques préjudiciables.

Chaque aile présente une partie mobile et une partie fixe. La partie fixe est la partie proximale ou centrale de l'aile, reliée au fuselage. La partie mobile est la partie d'extrémité ou partie distale de l'aile, c'est-à-dire la partie la plus éloignée du fuselage.

L'aile est pliable de telle sorte que sa partie d'extrémité mobile vienne se positionner sur (i.e. sur le dessus de) de sa partie fixe lors du pliage. L'aile est ainsi pliée vers le haut, comparativement à un pliage latéral ou vers le bas, le pliage vers le haut permet de limiter les interactions aérodynamiques avec les hélices. En outre, comparativement à un pliage vers le bas, le pliage vers le haut permet d'éviter aux ailes de toucher le sol lorsque le système de commande pour faire varier l'envergure de l'aile est actionné au sol.

Dans certains modes de réalisation, les hélices de sustentation comprennent deux pales et le système de commande est configuré pour arrêter les hélices de sustentation dans une position d'arrêt telle que les pales soient parallèles à l'axe longitudinal de l'aéronef. En étant positionnées de la sorte, les pales des hélices se trouvent dans la même direction que celle du fuselage, ce qui permet de réduire leur trainée aérodynamique lorsque l'aéronef est en vol de croisière.

Dans certains modes de réalisation, les hélices de sustentation sont des doubles hélices contrarotatives. Ce type d'hélice permet notamment de réduire le diamètre des rotors des hélices et, ainsi, d'améliorer la compacité de l'aéronef.

Dans certains modes de réalisation, certaines hélices de sustentation peuvent être basculées pour devenir des hélices propulsives. Ceci permet de limiter le nombre d'hélices embarquées sur l'aéronef. En particulier, des hélices peuvent avoir une fonction de sustentation lors d'une phase de vol, e.g. en vol basse vitesse, et une fonction de propulsion lors d'une autre phase de vol. e.g. en vol de croisière. Cette double utilisation des hélices de sustentation permet à l'aéronef d'être plus compact et plus léger, le nombre d'hélices étant diminué.

Les caractéristiques et avantages précités, ainsi que d'autres, apparaîtront à la lecture de la description détaillée qui suit. Cette description détaillée fait référence aux dessins annexés.

### Brève description des dessins

Les dessins annexés sont schématiques et ne sont pas nécessairement à l'échelle, ils visent avant tout à illustrer les principes de l'invention. Sur ces dessins, d'une figure (fig) à l'autre, des éléments (ou parties d'élément) identiques sont repérés par les mêmes signes de référence.
[Fig.1] Cette figure représente un exemple d'aéronef VTOL vu de profil.
[Fig.2] Cette figure représente l'exemple d'aéronef VTOL de la [Fig.1] vu de dessus, avec son plan de voilure fixe principal déplié.
[Fig.3] Cette figure est une vue analogue à celle de la [Fig.2], le plan de voilure fixe étant replié.

### Description détaillée

Des modes de réalisation particuliers de l'aéronef proposé sont décrits en détail ci-après, en référence à l'exemple représenté sur les dessins annexés. Ces modes de réalisation illustrent les caractéristiques et les avantages de l'invention. Il est toutefois rappelé que l'invention ne se limite ni à ces modes de réalisation, ni à l'exemple représenté.

De manière générale, l'aéronef VTOL proposé comprend un fuselage, au moins un système de propulsion, au moins quatre hélices de sustentation, et au moins deux plans de voilure fixe. Il peut s'agir d'un aéronef avec équipage ou sans équipage, comme un drone.

Dans l'exemple des figures, l'aéronef VTOL 1 comprend un fuselage 2, un système de propulsion 5, quatre hélices de sustentation 10 et trois plans de voilure fixe 20, 30, 40. Le premier plan de voilure fixe 20, le plus à l'avant de l'aéronef 1 est de type canard. Le deuxième plan de voilure fixe 30 situé dans la partie médiane de l'aéronef 1 est le plan de voilure principal. Il est de type paire d'ailes 32 et formé, dans l'exemple, d'une aile droite et d'une aile gauche jointes entre elles au-dessus du fuselage 2. Le troisième plan de voilure fixe 40 situé à l'arrière de l'aéronef 1, appelé plan de voilure arrière, est de type empennage.

Les quatre hélices de sustentation 10 sont réparties de part et d'autre du plan de voilure fixe 30 et de part et d'autre du fuselage 2. En d'autres termes, deux hélices de sustentation 10 sont situées à droite du fuselage, de part et d'autre (i.e. en avant et en arrière) de l'aile droite 32 et deux hélices de sustentation 10 sont situées à gauche du fuselage, de part et d'autre (i.e. en avant et en arrière) de l'aile gauche 32.

Les hélices de sustentation 10 de gauche (i.e. avant gauche et arrière gauche) sont séparées longitudinalement par au moins la grandeur de la corde C1 du plan de voilure fixe 30 située entre elles. Les hélices de sustentation 10 de droite (i.e. avant droite et arrière droite) sont séparées longitudinalement par au moins la grandeur de la corde C2 du plan de voilure fixe 30 située entre elles.

L'axe de rotation des hélices 10 est vertical. Dans l'exemple, chaque hélice de sustentation 10 est une double hélice contrarotative.

Suivant la direction longitudinale, les hélices 10 sont réparties suivant deux rangées : une rangée avant et une rangée arrière. Le plan de voilure arrière 40 se situe à l'arrière de la rangée arrière. Les hélices de sustentation 10 de la rangée avant (i.e. avant droite et avant gauche) sont séparées latéralement par au moins la largeur L1 du fuselage 2 située entre elles. Les hélices de sustentation 10 de la rangée arrière (i.e. arrière droite et arrière gauche) sont séparées latéralement par au moins la largeur L2 du fuselage 2 située entre elles.

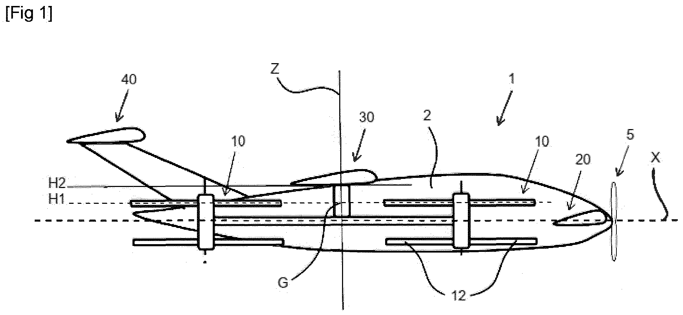

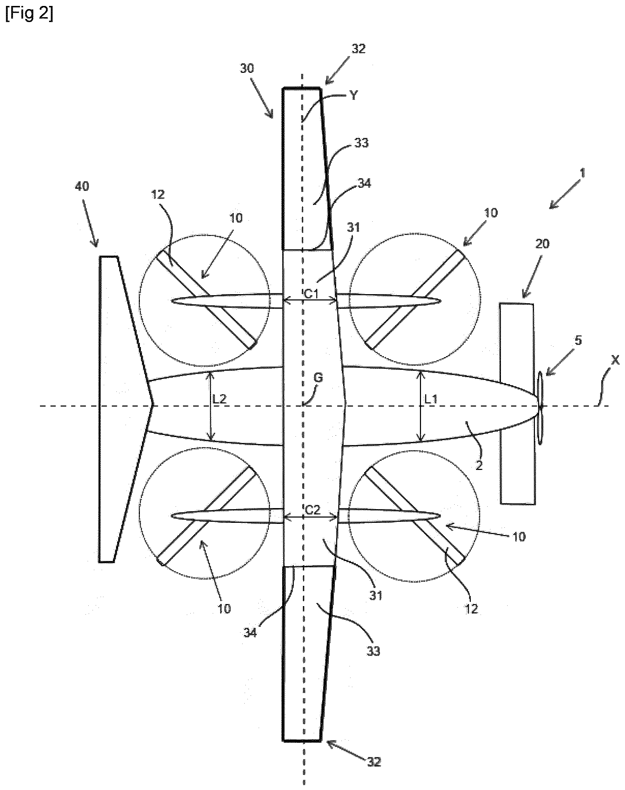

L'axe longitudinal X de l'aéronef 1 est représenté en pointillés sur les figures 1 et 2. L'axe latéral Y, représenté sur la [Fig.2], est perpendiculaire à l'axe longitudinal X et s'étend d'une extrémité à l'autre du plan de voilure fixe principal 30 en passant par le centre de masse G de l'aéronef. L'axe vertical Z, représenté sur la [Fig.1], est perpendiculaire aux axes X et Y et passe par le centre de masse G. Les expressions "inférieur", "supérieur", "haut", "bas", "au-dessus" et "en-dessous" renvoient à une différence de hauteur suivant l'axe vertical.

Les plans de voilure fixe situés en arrière des hélices de sustentation 10 les plus en avant, à savoir les plans de voilure 30 et 40 tous les deux situés en arrière de la rangée avant d'hélices 10, sont situés au-dessus de l'ensemble des hélices de sustentation 10, comme illustré sur la [Fig.1]. Cela signifie que les faces inférieures (intrados) des plans de voilure fixe 30, 40 sont toutes situées à une hauteur plus élevée que le plan de rotation le plus haut des hélices 10. Dans l'exemple de la [Fig.1], cela signifie que H2 > H1, où H2 est la hauteur de la face inférieure la plus basse, et H1 la hauteur du plan de rotation le plus haut.

Le plan de voilure fixe 30 a une envergure variable et l'aéronef 1 comprend un système de commande, c'est-à-dire un ensemble de dispositifs embarqués et de liaisons mécaniques, hydrauliques et/ou électriques, permettant de faire varier l'envergure du plan de voilure 30 en vol. Dans le cas d'un drone VTOL, ce système de commande peut être contrôlé automatiquement et/ou être télécommandé. Dans le cas d'un aéronef VTOL avec équipage, ce système de commande peut être contrôlé automatiquement et/ou manuellement depuis la cabine de pilotage. Ce système de commande est généralement adapté pour être contrôlé par les lois de pilotage de l'aéronef, afin d'adapter l'envergure à la phase de vol. Dans certains modes de réalisation, le système de commande est configuré pour augmenter l'envergure lors du passage du vol basse vitesse au vol de croisière, et pour diminuer l'envergure lors du passage du vol de croisière au vol basse vitesse. L'aéronef peut ainsi décoller et atterrir avec les ailes 32 en envergure réduite depuis une zone confinée.

Chaque aile 32 est pliable, de manière à positionner une partie d'extrémité mobile 33 de l'aile le long et au-dessus d'une partie fixe 31 de l'aile. Tout pliage en position intermédiaire (par exemple à angle droit) est à éviter afin de ne pas créer de prise aux vents.

Dans l'exemple des figures, une partie d'extrémité mobile 33 de chaque aile 32 est pliable le long d'une ligne de pliage 34.

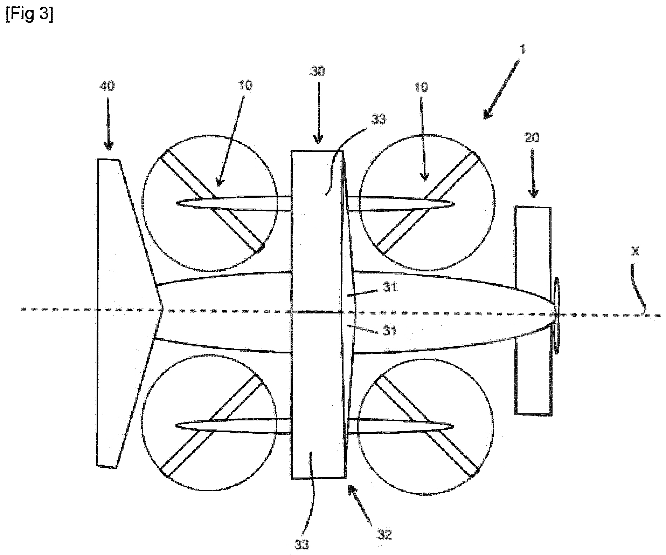

Sur la [Fig.2], les parties mobiles 33 sont dépliées latéralement et l'envergure des ailes 32 est maximale. Sur la [Fig.3], les parties mobiles 33 sont repliées et l'envergure des ailes 32 est minimale. Chaque partie mobile 33 est repliée par le haut et vient se positionner le long et au-dessus de la partie fixe 31.

Dans l'exemple des figures, le système de propulsion 5 de l'aéronef est une hélice de propulsion montée à l'extrémité avant de l'aéronef 1. D'autres systèmes de propulsion 5 comme une soufflante, un turboréacteur, un moteur à réaction ou un réseau de "petites" hélices pour une propulsion distribuée, peuvent être envisagés. Ces systèmes de propulsion peuvent être positionnés au-dessus des hélices de sustentation. Dans certains modes de réalisation, ces systèmes de propulsion sont positionnés sur la surface fixe la plus haute, pour réduire l'interaction avec les hélices de sustentation, ou sont montés sur les ailes 32 par l'intermédiaire d'un axe déporté.

Dans certains modes de réalisation, chaque hélice de sustentation 10 comprend deux pales 12 (donc quatre pales 12 dans le cas d'une double hélice) et le système de commande est configuré pour, en vol de croisière, arrêter les hélices de sustentation 10 dans une position d'arrêt telle que les pales 12 soient parallèles à l'axe longitudinal X de l'aéronef pour réduire leur trainée. Pour les mêmes raisons, dans certains modes de réalisation, les pales 12 peuvent être débrayées par rapport au rotor pour se positionner l'une au-dessus de l'autre pour avoir un impact aérodynamique réduit en vol de croisière.

Un exemple de fonctionnement optimisé de l'aéronef VTOL proposé, dans différentes phases de vol, est décrit ci-après.
(1) Vol basses vitesse (incluant atterrissage et décollage) :
   l'aéronef VTOL 1 évolue dans cette phase de vol en s'orientant avec les hélices de sustentation 10, d'axe vertical. Il peut ainsi effectuer des déplacements jusqu'à 56 km/ h (30 nœuds) avec les ailes 32 pliées. L'aéronef démontre ainsi des capacités accrues de tenue aux vents en raison d'une envergure réduite, grâce aux ailes pliables 32. Le système d'ailes pliables 32 en vol basse vitesse assure un encombrement minimal lors des décollages et des atterrissages. Pour une même masse, lors des atterrissages et décollages, la plupart des appareils VTOL existants ont des dimensions au moins deux fois plus élevées.
(2) Phase de transition :
   La transition du vol basse vitesse vers le vol de croisière se fait, après le dépliage des ailes 32, grâce au système de propulsion 5. Pendant la transition, les hélices de sustentation 10 d'axe vertical restent dans le plan horizontal de déplacement. Cette séparation des organes de sustentation et de propulsion pendant la transition permet de réduire la forte demande en puissance des hélices de sustentation 10. Le positionnement des hélices de sustentation 10 permet de réduire au maximum les interactions aérodynamiques avec les surfaces fixes. Le souffle des hélices 10 est en très grande partie dégagé des ailes 32. De plus, les hélices 10 étant positionnées sous le plan des ailes 32, l'effet est encore plus réduit.
(3) Vol de croisière :
   Dans cette phase de vol les hélices 10 sont arrêtées et les pales 12 positionnées le long du fuselage 2 afin de réduire leur traînée. Il n'y a pas d'interaction entre les surfaces tournantes et fixes.

Les modes de réalisation décrits dans le présent exposé sont donnés à titre illustratif et non limitatif, une personne du métier pouvant facilement, au vu de cet exposé, modifier ces modes de réalisation, ou en envisager d'autres.

En particulier, une personne du métier pourra facilement envisager des variantes ne comprenant qu'une partie des caractéristiques des modes de réalisation précédemment décrits, du moment qu'elles sont comprises dans le champs des revendications.

## Revendications

1. Aéronef à décollage et atterrissage vertical comprenant :
un fuselage (2);
au moins un système de propulsion (5);
quatre hélices de sustentation (10);
au moins deux plans (20, 30, 40) de voilure fixe dont un plan de voilure principal (30) et un plan de voilure arrière (40) situé à l'arrière de l'aéronef;
dans lequel :
le plan de voilure principal (30) et le plan de voilure arrière (40) sont tous les deux situés en arrière des hélices de sustentation (10) les plus en avant, et tous les deux situés au-dessus des hélices de sustentation (10);
le plan de voilure principal (30) a une envergure variable et comprend une paire d'ailes (32);
l'aéronef comprend un système de commande permettant de faire varier l'envergure du plan de voilure principal (30) en vol en dépliant chaque aile (32) latéralement;
les quatre hélices de sustentation (10) sont réparties de part et d'autre du plan de voilure principal (30) et de part et d'autre du fuselage (2),
les deux hélices de sustentation (10) situées d'un même côté du fuselage (2) sont séparées longitudinalement par au moins la grandeur de la corde (C1, C2) du plan de voilure principal (30) située entre elles; et
les deux hélices de sustentation (10) situées d'un même côté du plan de voilure principal (30) sont séparées latéralement par au moins la largeur (L1, L2) du fuselage (2) située entre elles,
**caractérisé en ce que** chaque aile (32) est pliable suivant l'axe latéral de l'aéronef, de telle sorte qu'une partie d'extrémité mobile (33) de l'aile vient se positionner le long et au-dessus d'une partie fixe (31) de l'aile lors du pliage et **en ce que** les deux hélices de sustentation (10) situées d'un même côté du fuselage (2) sont reliées à la partie fixe (31) de l'aile (32) située du même côté du fuselage (2).

2. Aéronef selon la revendication 1, dans lequel le système de commande est configuré pour faire tourner les hélices de sustentation (10) en vol basse vitesse et les arrêter en vol de croisière.

3. Aéronef selon l'une quelconque des revendications précédentes, dans lequel le système de commande est configuré pour augmenter l'envergure lors du passage du vol basse vitesse au vol de croisière, et pour diminuer l'envergure lors du passage du vol de croisière au vol basse vitesse.

4. Aéronef selon l'une quelconque des revendications précédentes, dans lequel l'envergure peut varier entre une envergure maximum et une envergure minimum, l'envergure minimum étant inférieure ou égale à 50 % et, plus particulièrement, à 40% de l'envergure maximum.

5. Aéronef selon l'une quelconque des revendications précédentes, dans lequel les deux hélices de sustentation (10) situées d'un même côté du fuselage (2) sont séparées longitudinalement d'une distance comprise entre 1,3 et 3 fois ladite grandeur de la corde (C1, C2).

6. Aéronef selon l'une quelconque des revendications précédentes, dans lequel les deux hélices de sustentation (10) situées d'un même côté du plan de voilure principal (30) sont séparées latéralement d'une distance comprise entre 1,3 et 3 fois ladite largeur (L1, L2) **du** fuselage.

7. Aéronef selon l'une quelconque des revendications précédentes, dans lequel les hélices de sustentation (10) comprennent deux pales (12), le système de commande étant configuré pour arrêter les hélices de sustentation (10) dans une position d'arrêt telle que les pales (12) soient parallèles à l'axe longitudinal de l'aéronef.

## Patentansprüche

1. Vertikale startendes und landendes Luftfahrzeug, umfassend:
einen Rumpf (2);
mindestens ein Antriebssystem (5);
vier Auftriebspropeller (10);
mindestens zwei feste Tragflächen (20, 30, 40), darunter eine Haupttragfläche (30) und eine hintere Tragfläche (40), die sich am Heck des Luftfahrzeugs befindet;
wobei:
die Haupttragfläche (30) und die hintere Tragfläche (40) sich beide hinter den vordersten Auftriebspropellern (10) befinden und sich beide über den Auftriebspropellern (10) befinden;
die Haupttragfläche (30) eine variable Spannweite hat und ein Flügelpaar (32) umfasst;
das Luftfahrzeug ein Steuersystem umfasst, mit dem die Spannweite der Haupttragfläche (30) im Flug durch seitliches Ausklappen jedes Flügels (32) variiert werden kann;
die vier Auftriebspropeller (10) auf beiden Seiten der Haupttragfläche (30) und auf beiden Seiten des Rumpfes (2) verteilt sind,
die beiden Auftriebspropeller (10), die sich auf derselben Seite des Rumpfes (2) befinden, längs um mindestens die Größe der Sehne (C1, C2) der dazwischen liegenden Haupttragfläche (30) voneinander getrennt sind; und
die beiden Auftriebspropeller (10), die sich auf derselben Seite der Haupttragfläche (30) befinden, seitlich um mindestens die Breite (L1, L2) des dazwischen liegenden Rumpfs (2) voneinander getrennt sind,
**dadurch gekennzeichnet, dass** jeder Flügel (32) entlang der Querachse des Luftfahrzeugs klappbar ist, so dass sich ein beweglicher Endabschnitt (33) des Flügels beim Klappen entlang und oberhalb eines festen Teils (31) des Flügels positioniert und dass die beiden Auftriebspropeller (10), die sich auf derselben Seite des Rumpfes (2) befinden, mit dem festen Teil (31) des Flügels (32) verbunden sind, der sich auf derselben Seite des Rumpfes (2) befindet.

2. Luftfahrzeug nach Anspruch 1, wobei das Steuersystem so eingerichtet ist, dass es die Auftriebspropeller (10) im Langsamflug dreht und sie im Reiseflug stoppt.

3. Luftfahrzeug nach einem der vorhergehenden Ansprüche, wobei das Steuersystem so eingerichtet ist, dass es die Spannweite bei dem Übergang von dem Langsamflug zu dem Reiseflug vergrößert und bei dem Übergang von dem Reiseflug zu dem Langsamflug die Spannweite verkleinert.

4. Luftfahrzeug nach einem der vorhergehenden Ansprüche, wobei die Spannweite zwischen einer maximalen Spannweite und einer minimalen Spannweite variieren kann, wobei die minimale Spannweite kleiner oder gleich 50 % und insbesondere 40 % der maximalen Spannweite ist.

5. Luftfahrzeug nach einem der vorhergehenden Ansprüche, wobei die beiden Auftriebspropeller (10), die sich auf derselben Seite des Rumpfes (2) befinden, längs um einen Abstand zwischen dem 1,3- und 3-fachen der Größe der Sehne (C1, C2) voneinander getrennt sind.

6. Luftfahrzeug nach einem der vorhergehenden Ansprüche, wobei die beiden Auftriebspropeller (10), die sich auf derselben Seite der Haupttragfläche (30) befinden, seitlich um einen Abstand zwischen dem 1,3- und 3-fachen der Breite (L1, L2) des Rumpfes voneinander getrennt sind.

7. Luftfahrzeug nach einem der vorhergehenden Ansprüche, wobei die Auftriebspropeller (10) zwei Blätter (12) umfassen, wobei das Steuersystem so eingerichtet ist, dass es die Auftriebspropeller (10) in einer Stoppposition stoppt, sodass die Blätter (12) parallel zur Längsachse des Luftfahrzeugs stehen.

## Claims

1. Vertical take-off and landing aircraft comprising:
a fuselage (2);
at least one propulsion system (5);
four lift propellers (10);
at least two fixed wing surfaces (20, 30, 40) including a main wing surface (30) and a rear wing surface (40) located at the rear of the aircraft;
wherein:
the main wing surface (30) and the rear wing surface (40) are both located behind the foremost lift propellers (10), and both located above the lift propellers (10);
the main wing surface (30) has a variable span and comprises a pair of wings (32);
the aircraft comprises a control system for varying the span of the main wing surface (30) in flight by deploying each wing (32) laterally;
the four lift propellers (10) are distributed on either side of the main wing surface (30) and on either side of the fuselage (2),
the two lift propellers (10) located on a same side of the fuselage (2) are longitudinally separated by at least the size of the chord (C1, C2) of the main wing surface (30) located between them; and
the two lift propellers (10) located on the same side of the main wing surface (30) are laterally separated by at least the width (L1, L2) of the fuselage (2) located between them,
**characterised in that** each wing (32) is foldable along the lateral axis of the aircraft, such that a movable end part (33) of the wing positions itself along and above a fixed part (31) of the wing during folding, and **in that** the two lift propellers (10) located on the same side of the fuselage (2) are connected to the fixed part (31) of the wing (32) located on the same side of the fuselage (2).

2. Aircraft according to Claim 1, wherein the control system is configured to rotate the lift propellers (10) in low-speed flight and stop them in cruise flight.

3. Aircraft according to any one of the preceding claims, wherein the control system is configured to increase the span when switching from low-speed flight to cruise flight, and to decrease the span when switching from cruise flight to low-speed flight.

4. Aircraft according to any one of the preceding claims, wherein the span may vary between a maximum span and a minimum span, the minimum span being less than or equal to 50% and, more particularly, 40% of the maximum span.

5. Aircraft according to any one of the preceding claims, wherein the two lift propellers (10) located on the same side of the fuselage (2) are separated longitudinally by a distance between 1.3 and 3 times said size of the chord (C1, C2).

6. Aircraft according to any one of the preceding claims, wherein the two lift propellers (10) located on the same side of the main wing surface (30) are separated laterally by a distance between 1.3 and 3 times said width (L1, L2) of the fuselage.

7. Aircraft according to any one of the preceding claims, wherein the lift propellers (10) comprise two blades (12), the control system being configured to stop the lift propellers (10) in a stop position such that the blades (12) are parallel to the longitudinal axis of the aircraft.
